# EUROPÄISCHE PATENTSCHRIFT

(11) **EP 2 803 479 B1**
(45) Veröffentlichungstag und Bekanntmachung des Hinweises auf die Patenterteilung: **19.02.2020**
(21) Anmeldenummer: 13002547.1
(22) Anmeldetag: 15.05.2013
(51) Int. Cl.: B32B 7/06, B29C 65/00, B32B 7/12, B32B 27/00, B32B 3/10, B65C 3/00, B65C 9/00, G06K 19/077, G09F 3/00, G09F 3/04

(54) **Schmelzverbindungskennzeichnung eines Kunststoffgegenstands**
Fusion welded label of a plastic article
Caractérisation de la liaison par fusion d'un objet en matière synthétique

(43) Veröffentlichungstag der Anmeldung: 19.11.2014
(73) Patentinhaber: PMG Besitz GmbH & Co. KG, 85276 Pfaffenhofen (DE)
(72) Erfinder: Plöckl Roman, 85276 Pfaffenhofen (DE)
(74) Vertreter: Spranger, Stephan

(56) Entgegenhaltungen:
- WO-A1-01/62613
- DE-C1- 19 853 226
- DE-U1-202007 009 169
- FR-A1- 2 602 487

## Beschreibung

Die Erfindung betrifft eine Kennzeichnung eines Kunststoffgegenstands mit einem Schmelzverbindungskennzeichnungssystem.

Derartige Schmelzverbindungskennzeichnungen werden bisher dadurch erreicht, dass in die Spritzgussform eines Kunststoffgegenstands ein Kennzeichenmittel auf einem Kunststoffträger eingelegt und beim Spritzgießen zu einer Schmelzverbindungskennzeichnung mit eingeformt bzw. mit eingeschmolzen wird. Diese Schmelzverbindungskennzeichnungen erfordern eine gewisse Dickwandigkeit des Gegenstands zumindest im Bereich der Schmelzverbindungskennzeichnung. Derartige Schmelzverbindungskennzeichnungen stellen jedoch nach ihrer Applizierung eine eindeutige und unverfälschte Kennzeichnung des Produktes oder Gegenstands dar. Derartige eindeutige Kennzeichnungen, die beim Spritzgießen von Kunststoffgegenständen gefertigt werden, sind unwiderruflich mit dem Gegenstand verbunden und können nicht mehr abgelöst werden, da sich die Kunststoffe nicht mehr trennen lassen. Ein nachträgliches Ein- oder Aufschmelzen von Schmelzverbindungskennzeichnungen ist bisher nur mit außergewöhnlich hohen Kosten verbunden und somit für Gegenstände, die Massenartikel darstellen, unwirtschaftlich.

Die Dokumente WO 01/62613 A1, FR 2 602 487 A1, DE 20 2007 009 169 U1 und DE 198 53 226 C1 beschreiben jeweils Verfahren bzw. Etiketten welche es ermöglichen, Kennzeichnungen durch Verschmelzen auf Behältern, insbesondere Kunststoffbehältern aufzubringen.

Aufgabe der Erfindung ist es, ein Schmelzverbindungskennzeichnungssystem zu schaffen, das eine wirtschaftlich vertretbare, kostengünstige Lösung für eine permanente Kennzeichnung von Kunststoffgegenständen als Vorprodukt, Zwischenprodukt oder Endprodukt unabhängig von Wandstärken, Formgebungen und Herstellungsverfahren der Kunststoffgegenstände ermöglicht. Eine weitere Aufgabe besteht darin, eine geeignete Kennzeichnungsvorrichtung zum Kennzeichnen von Kunststoffgegenständen mit einer Schmelzverbindungskennzeichnung anzugeben sowie einen Etikettierstreifen zu schaffen, der in der erfindungsgemäßen Kennzeichnungsvorrichtung eingesetzt werden kann. Schließlich betrifft ein weiterer Aspekt der Erfindung ein Verfahren zur Schmelzverbindungskennzeichnung von Kunststoffgegenständen.

Diese Aufgabe wird erfindungsgemäß mit einem Kunststoffgegenstand mit einem Schmelzverbindungskennzeichnungssystem mit den Merkmalen gemäß dem Anspruch 1 gelöst. Die Merkmale einer Kennzeichnungsvorrichtung umfasst Anspruch 6 und mit dem Anspruch 7 wird ein Etikettierstreifen offenbart, der in einer derartigen Kennzeichnungsvorrichtung in vorteilhafter Weise eingesetzt werden kann. Schließlich offenbart Anspruch 10 Verfahrensschritte eines Verfahrens zur Schmelzverbindungskennzeichnung von Kunststoffgegenständen. Bevorzugte Ausführungsformen der Erfindung sind in den Unteransprüchen definiert.

Eine Ausführungsform der Erfindung weist einen Kunststoffgegenstand mit einem Schmelzverbindungskennzeichnungssystem auf. Dabei weist eine Schmelzverbindungskennzeichnung ein transparentes Kunststofffolienstück mit einer Innenfläche und einer Außenfläche auf. Die Innenfläche und die Außenfläche des Kunststofffolienstücks sind klebstofffrei. Die Innenfläche weist ein Kennzeichenmittel auf, wobei die Innenfläche des Kunststofffolienstücks mit dem Kunststoffgegenstand eine Schmelzverbindung aufweist

Diese Schmelzverbindungskennzeichnung hat den Vorteil, dass sie mithilfe des Kennzeichnungsmittels einen Gegenstand, sei es als Vorprodukt, Zwischenprodukt oder als Endprodukt, kennzeichnen und mit dem Gegenstand unlösbar verbunden werden kann, nachdem eine Vorform, eine Zwischenform oder eine Endform des Gegenstands bereits vorliegt. Durch das Aufbringen des Kennzeichnungsmittels auf ein Kunststofffolienstück ist der Vorteil verbunden, dass das Kennzeichenmittel frei wählbar ist und nach außen durch das Kunststofffolienstück geschützt bleibt. Das Kennzeichenmittel kann auf dem Gegenstand schmelztechnisch verankert werden, indem die Innenfläche des Kunststofffolienstücks auf oder in einen vorgewärmten oder vorgeheizten Oberflächenbereich des Gegenstands ein- oder aufschmelzbar ist. Durch die schmelztechnische Verbindung der Innenfläche auf den Außenflächenbereich des Gegenstands bleibt das Kennzeichenmittel unlösbar mit dem Gegenstand oder dem Vorprodukt des Gegenstands verbunden.

Das Vorprodukt selbst kann eine Folie, ein Schlauch oder ein in anderer Weise vorgeformtes oder für die Ausformung des Gegenstands zugeschnittenes auch dünnwandiges Kunststoffmaterial aufweisen. Entscheidend ist lediglich, dass die Innenfläche mit dem Außenbereich des Kunststoffgegenstands verschmolzen ist. Ein Entfernen der Kennzeichnung von dem jeweiligen Gegenstand ist nur mittels erheblicher Beschädigung des Gegenstands möglich. Somit eignet sich die erfindungsgemäße Kennzeichnung besonders für die Kennzeichnung von Kunststoffflaschen, Kunststoffbehältern oder Kunststoffverpackungsmaterialien, auf denen beispielsweise Kennzeichnungshinweise auf Verfallsdatum der mittels des Gegenstands verpackten Waren, Herkunftsangaben sowohl des Gegenstands selbst als auch der in dem Gegenstand eingeschlossenen Produkte oder Angaben zu der Zusammensetzung des Kunststoffmaterials, dem Hersteller des Kunststoffmaterials oder Angaben zu Produktionsverfahren der in dem Gegenstand enthaltenen Mittel vorgesehen werden können, die unlösbar mit dem Kunststoffgegenstand verbunden bleiben.

Diese Unlösbarkeit der Kennzeichnung mit derartigen Informationen wird durch eine Ein- oder Aufschmelztechnik erreicht, was mit einem aufgeklebten Etikettieren nicht realisierbar ist. Außerdem ist die erfindungsgemäße Kennzeichnung in der Lage, das herkömmliche Etikettieren von Gegenständen wie Flaschen, Dosen oder Verpackungsmaterialien zu ersetzen mit dem Vorteil, dass eine derartige Etikettierung der Gegenstände untrennbar mit den gekennzeichneten Gegenständen verbunden bleiben, solange der Gegenstand selbst nicht zerstört wird.

Gemäß der Erfindung weist das Kennzeichenmittel einen Aufdruck auf, der spiegelbildlich auf der Innenfläche des Kunststofffolienstücks angeordnet ist und mit einem Außenflächenbereich des Kunststoffgegenstands eine Schmelzverbindung aufweist, so dass der kennzeichnende Aufdruck auf der Außenfläche des Kunststofffolienstücks sichtbar und lesbar erscheint. Dabei kann das Kunststofffolienstück, das auf seiner Innenfläche, welche dem Gegenstand zugewandt ist, den Aufdruck aufweist, eine transparente eventuell auch eingefärbte Kunststofffolie sein. Auch der Aufdruck auf der Innenfläche der transparenten oder eingefärbten Kunststofffolie kann die unterschiedlichsten Strukturen aufweisen.

In einer weiteren Ausführungsform der Erfindung ist das Kennzeichenmittel ein Aufdruck, der vorzugsweise einen Barcodeaufdruck oder einen Datamatrixcodeaufdruck aufweist, so dass das Kennzeichenmittel mit automatischen Lesegeräten erfassbar und auswertbar ist.

Auch ist es in einer weiteren Ausführungsform der Erfindung möglich als Kennzeichenmittel einen Funkchip oder ein RFID-Inlay (Radio Frequency Identification Inlay) vorzusehen, so dass ein funktechnischer Zugriff auf die Daten des Funkchips bzw. des RFID-Inlays möglich ist. Durch die Anordnung des Funkchips oder des RFID-Inlays auf der Innenfläche des Kunststofffolienstückes wird der Funkchip bzw. RFID-Inlay von dem Kunststofffolienstück zusätzlich mechanisch geschützt.

In einer weiteren Ausführungsform der Erfindung ist es vorgesehen, dass das Kennzeichenmittel oder das Kunststofffolienstück ein fälschungssicheres Merkmal, nämlich ein Kippfarbenmuster, ein Guillochemuster oder ein Hologramm aufweist. Eine Schmelzverbindungskennzeichnung mit derartigen fälschungssicheren Merkmalen hat den Vorteil, dass es in keiner Weise manipuliert werden kann. Somit bleibt die Originalität des durch die Schmelzverbindungskennzeichnung markierten Gegenstands entsprechend der Lebensdauer des Gegenstands erhalten. Diese fälschungssicheren Merkmale, die mit der erfindungsgemäßen Schmelzverbindungskennzeichnung von Gegenständen möglich sind, sind besonders dort von Vorteil, wenn es um die Kennzeichnung von hochwertigen Produkten wie beispielsweise Medikamenten oder Chemieprodukten geht, bei denen Leib und Leben von Mensch und/oder Tier gefährdet sind.

In einer weiteren Ausführungsform der Erfindung umfasst der Gegenstand, der die erfindungsgemäße Schmelzverbindungskennzeichnung aufweisen kann, nicht nur Vor-, Zwischen- oder Endprodukte sondern auch Halbzeuge und Fertigungsprodukte aus Kunststoff. Dabei ist es vorgesehen, das klebstofffreie Kunststofffolienstück aus einem Thermoplasten herzustellen, so dass das Kunststofffolienstück vorzugsweise einen HDPE (High Density Polyethylen) oder einen PP (Polypropylen) Kunststoff oder einen PET (Polyester) Kunststoff aufweist. Diese Thermoplaste haben den Vorteil, dass sie transparent sind, so dass Aufdrucke vorzugsweise auf der schmelztechnisch geschützten Innenseite des Kunststofffolienstückes von der Außenseite erkennbar sind. Jedoch können, wie bereits oben erwähnt, auch intransparente Thermoplaste eingesetzt werden, wenn beispielsweise Funkchips, Magnetstreifen oder RFID-Inlays für eine Schmelzverbindungskennzeichnung vorgesehen sind.

Ein weiterer Aspekt der Erfindung betrifft eine Kennzeichnungsvorrichtung für ein Kennzeichnen eines Kunststoffgegenstands mit einer Schmelzverbindungskennzeichnung. Die erfindungsgemäße Kennzeichnungsvorrichtung weist eine Zuführung für einen Kunststoffgegenstand wie ein Vor-, Zwischen- oder Endprodukt zu einer Kennzeichnungsposition der Kennzeichnungsvorrichtung auf. Im Bereich der Kennzeichnungsposition kann eine Heizvorrichtung angeordnet sein, wenn nicht das Vorprodukt oder Zwischenprodukt bereits mit einer entsprechenden Aufheiztemperatur der Kennzeichnungsvorrichtung zugeführt wird.

Eine derartige Heizvorrichtung heizt mindestens lokal einen Außenflächenbereich des Kunststoffgegenstands auf. Außerdem weist die Kennzeichnungsvorrichtung einen Applikator auf. Der Applikator weist eine Zufuhrfläche für einen Etikettierstreifen auf, der aus einem Trägerfolienstreifen und aufgeklebten klebstofffreien Kunststofffolienstücken mit innenseitig angeordneten Kennzeichenmitteln besteht. Ferner weist die Kennzeichnungsvorrichtung eine Trenneinrichtung auf, die im Bereich der Kennzeichnungsposition angeordnet ist und eine Trennkannte aufweist.

Diese Trennkante ermöglicht es, die Kunststofffolienstücke von dem Trägerfolienstreifen zu trennen, bevor ein Ein- oder Aufschmelzen der Kunststofffolienstücke mit innen- und/oder außenseitig angeordneten Kennzeichenmitteln auf einen vorgeheizten Außenflächenbereich des Kunststoffgegenstands erfolgt. Ferner ist eine Andruckvorrichtung in der Kennzeichnungsvorrichtung vorgesehen, die im Bereich der Kennzeichnungsposition angeordnet ist. Die Andruckvorrichtung wirkt auf die Außenfläche des Kunststofffolienstücks beim Ein- oder Aufschmelzen desselben in oder auf einen vorgeheizten Außenflächenbereich des Kunststoffgegenstands ein.

Mit einer derartigen Kennzeichnungsvorrichtung ist es möglich, die Kunststofffolienstücke mit einem handelsüblichen Etikettenspender auf dem vorgeheizten Außenflächenbereich des Gegenstands zu applizieren. Dabei kann diese Verspendung auch direkt in einem Produktionsablauf eingegliedert werden, so dass bereits der heiße Kunststoff als Vorprodukt, oder Zwischenprodukt der Kennzeichnungsvorrichtung zugeführt wird. Hierdurch kann ein Kennzeichnungsprozess im Vergleich zu einer normalen Stapelapplikation von Etiketten, bei der Etiketten von einem Stapel mit einem Greifer einzeln in ein Werkzeug eingelegt werden, deutlich vereinfacht und vor allem um ein Mehrfaches beschleunigt werden.

Mithilfe der erfindungsgemäßen Kennzeichnungsvorrichtung können schließlich Spendezeiten erreicht werden, welche auch bei einer Etikettierung von Produkten erreichbar sind, wie beispielsweise in Flaschenabfüllanlagen, wobei die erfindungsgemäße Kennzeichnungsvorrichtung aufgrund der erforderlichen Heizvorrichtung zum lokalen Aufheizen mindestens eines Außenbereich der aufzufüllenden Flaschen stromaufwärts der eigentlichen Abfüllstation angeordnet ist.

In vorteilhafter Weise liefert die erfindungsgemäße Kennzeichnungsvorrichtung deutliche Logistikvorteile, da jede Flasche in einer Abfüllvorrichtung zu relativ niedrigen Kosten identifizierbar wird, und zwar sowohl bei der Produktion der Flasche, als auch beim Abfüllen wie auch bei der Chargenerkennung und Reklamation sowie bei einem Recycling der Flaschen. Insbesondere kann die Kennzeichnungsvorrichtung zum Kennzeichnen von Mehrweg PET Flaschen (Polyethylenterephthalat) für die Produktverfolgung und für das Recycling eingesetzt werden. Darüber hinaus ist es von Vorteil, die Schmelzverbindungskennzeichnung bei Kunststoffflaschen für den industriellen Bereich, insbesondere im Chemiebereich, sowie für Spritzmittel oder für hochwertige Konsumgüter einzusetzen. Insbesondere ist die erfindungsgemäße Schmelzverbindungskennzeichnung mithilfe der Kennzeichnungsvorrichtung für Kunststoffflaschen in dem Pharma- und Medikamentenbereich einsetzbar.

Die hohe Appliziergeschwindigkeit von erfindungsgemäßen Schmelzverbindungskennzeichnungen wird nicht zuletzt aufgrund eines erfindungsgemäßen Etikettenstreifens erreicht, der in der Kennzeichnungsvorrichtung wie oben erörtert eingesetzt wird.

Ein weiterer Aspekt der Erfindung betrifft deshalb einen Etikettierstreifen, der einen Trägerfolienstreifen mit einseitiger Klebstoffbeschichtung aufweist. Die Klebstoffbeschichtung ist derart beschaffen, dass sie adhäsiv Kunststofffolienstücke mit aufgebrachtem Kennzeichnungsmittel, die keinerlei Klebstoff aufweisen und somit vollständig klebstofffrei sind, aufnehmen und in der Kennzeichnungsvorrichtung problemlos freigeben kann. Dazu sind auf der Klebstoffbeschichtung des Trägerfolienstreifens die klebstofffreien Kunststofffolienstücke angeordnet und weisen eine Innenfläche und eine Außenfläche auf. Die Innenfläche der Kunststofffolienstücke ist über die Klebstoffbeschichtung mit dem Trägerfolienstreifen verbunden, wobei jeweils ein Kennzeichenmittel eines zu kennzeichnenden Kunststoffgegenstands auf der Innenfläche des Kunststofffolienstücks angeordnet sein kann.

Dazu weist das Kennzeichenmittel einen Aufdruck auf, der spiegelbildlich auf der Innenfläche des Kunststofffolienstücks angeordnet ist, insbesondere dann, wenn dieser Aufdruck von der Außenfläche des Kunststofffolienstücks aus zu identifizieren ist. Das setzt voraus, dass vorzugsweise das Kunststofffolienstück aus einem transparenten Material aufgebaut ist, wie vorzugsweise einem HDPE oder einem PP Material wie oben bereits erörtert. Ein derartiger spiegelbildlicher Aufdruck eines Kennzeichenmittels kann einen Barcodeaufdruck oder einen Datamatrixcodeaufdruck aufweisen.

Außerdem ist es möglich, auf der Innenfläche des Kunststofffolienstückes des Etikettierstreifens einen Funkchip oder ein RFID-Inlay (Radio Frequency Identification Inlay) vorzusehen, wobei in diesem Fall das Kunststofffolienstück des Etikettierstreifens intransparent sein kann. Sowohl das Kennzeichenmittel als auch das Kunststofffolienstück des Etikettierstreifens können zusätzliche fälschungssichere Merkmale aufweisen, wie sie bereits oben erörtert wurden.

Mit einem derartigen Etikettierstreifen wird ein Verfahren zur Schmelzverbindungskennzeichnung von Gegenständen wesentlich vereinfacht und eine niedrige Taktzeit für den Aufbringvorgang eines Kunststofffolienstückes mit Kennzeichnungsmittel erreicht, wobei der Kennzeichnungsvorgang um ein Vielfaches schneller erfolgen kann als bei herkömmlichen Stapelapplikationen von Etiketten. Darüber hinaus wird durch die Selbstklebeeigenschaften eines Trägerpapiers des Trägerfolienstreifens auch die Etikettierstreifenrolle, auf welcher sich die ausgestanzten Kunststofffolienstücke mit innenseitig angeordneten Kennzeichenmitteln befinden, während des Schmelzverbindungsprozesses in der Kennzeichnungsvorrichtung stabil gehalten. Ein herkömmliches, sogenanntes Teleskopieren wird dadurch vermieden. Da ein überwiegender Teil der ausgestanzten Kunststofffolienstücke in kleinen Formaten ausgebildet sein wird, erweist sich die hohe Stabilität der Etikettierstreifenrolle als zusätzlicher Vorteil.

Ein Verfahren zur Schmelzverbindungskennzeichnung eines Kunststoffgegenstands weist die nachfolgenden Verfahrensschritte auf. Zunächst werden Kennzeichenmittel auf einer Innenfläche einer klebstofffreien Kunststofffolie angeordnet. Danach erfolgt ein Aufkleben der klebstofffreien Innenfläche auf eine Klebstoffbeschichtung einer Trägerfolie beispielsweise aus einem Trägerpapier zu einer Etikettierfolie. Anschließend kann die Etikettierfolie zu Etikettierstreifen strukturiert werden, wobei die Etikettierstreifen einen Trägerfolienstreifen aufweisen, auf dem separierte anhaftende Kunststofffolienstücke hintereinander in einem Abstand voneinander angeordnet sind, die jeweils einzelne Kennzeichenmittel auf ihren Innenflächen aufweisen. Danach wird der Etikettierstreifen einer Kennzeichnungsvorrichtung zugeführt. In einer entsprechenden Kennzeichnungsposition der Kennzeichnungsvorrichtung erfolgt ein Trennen der Kunststofffolienstücke mit angeordneten Kennzeichenmitteln von dem Trägerfolienstreifen. Abschließend wird ein Ein- oder Aufschmelzen der Innenfläche der Kunststofffolienstücke in oder auf einem vorgeheizten Außenflächenbereich des Kunststoffgegenstands bei vorgegebener Ein- oder Aufschmelztemperatur durchgeführt.

In einem Durchführungsbeispiel wird das Anordnen von gedruckten Kennzeichenmitteln auf die Innenfläche eines Kunststofffolienstücks spiegelbildlich erfolgen, damit von einer Außenfläche des transparenten Kunststofffolienstücks nach dem Ein- oder Aufschmelzen desselben auf einen zu kennzeichnenden Gegenstand das Kennzeichnungsmittel eindeutig identifizierbar oder lesbar wird.

Für das Ein- oder Aufschmelzen der Innenfläche der Kunststofffolienstücke reicht es aus, wenn es mindestens lokal in dem Außenflächenbereich des Kunststoffgegenstands, auf den das Kunststofffolienstück aufzubringen ist, ein Erweichungstemperaturmaximum des Kunststofffolienstücks erreicht wird. Dabei wird berücksichtigt, dass der Erweichungstemperaturbereich von einem Minimalwert bis zu einem Maximalwert eines Thermoplasten ansteigt, ehe der Thermoplast selbst in die Schmelzphase übergeht. Bei Erreichen des Erweichungstemperaturmaximums kann unter einem geringen Anpressdruck eine intensive Verschmelzung zwischen der Innenfläche des Kunststofffolienstücks mit dem aufgeheizten Außenflächenbereich des Kunststoffgegenstands erfolgen.

Die Erfindung wird im Folgenden anhand der beispielhaft erläuterten Ausführungsformen näher beschrieben werden.
- Figur 1: zeigt eine schematische perspektivische Ansicht eines einschmelzbaren Kunststofffolienstücks mit aufgebrachtem Kennzeichenmittel einer Schmelzverbindungskennzeichnung gemäß einer ersten Ausführungs-form der Erfindung;
- Figur 2: zeigt eine schematische perspektivische Ansicht eines einschmelzbaren Kunststofffolienstücks mit aufgebrachtem Kennzeichenmittel einer Schmelzverbindungskennzeichnung gemäß einer zweiten Ausführungs-form der Erfindung;
- Figur 3: zeigt eine schematische perspektivische Ansicht eines einschmelzbaren Kunststofffolienstücks mit aufgebrachtem Kennzeichenmittel einer Schmelzverbindungskennzeichnung gemäß einer dritten Ausführungs-form der Erfindung;
- Figur 4: zeigt mit den Figuren 4a bis 4h schematische Querschnitte von Kompo-nenten einer Schmelzverbindungskennzeichnung im Rahmen eines Ver-fahrens zur Schmelzverbindungskennzeichnung eines Gegenstands;
- Figur 5: zeigt eine perspektivische Prinzipskizze einer Kennzeichnungsvorrichtung für ein Kennzeichnen eines Kunststoffgegenstands (2) mit einer Schmelzverbindungskennzeichnung im Bereich einer Kennzeichnungs-position.

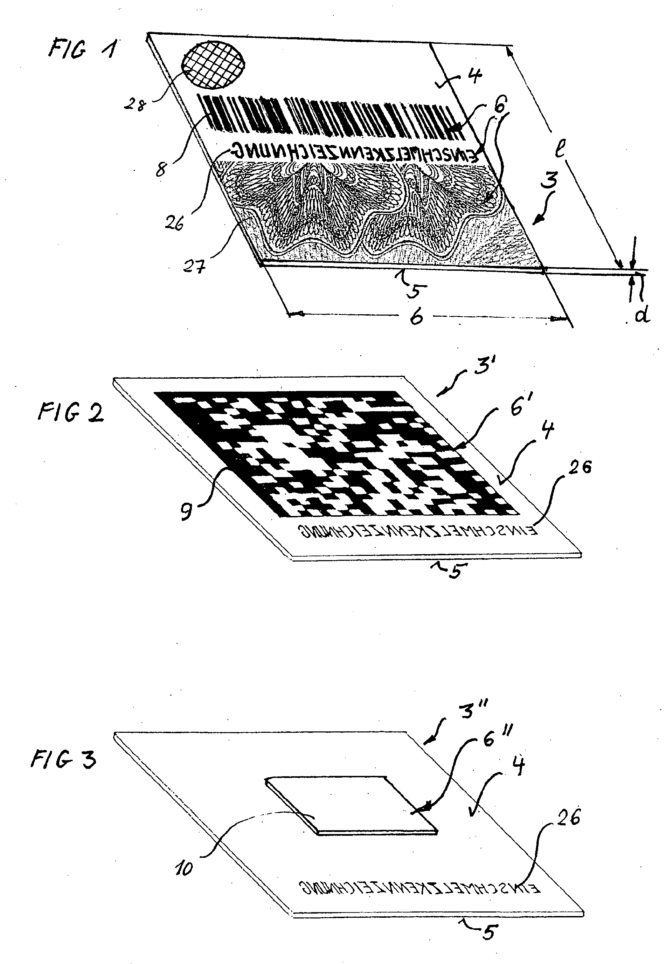

Figur 1 zeigt eine schematische perspektivische Ansicht eines ein- oder aufschmelzbaren Kunststofffolienstücks 3 mit aufgebrachtem Kennzeichenmittel 6 einer Schmelzverbindungskennzeichnung 1 gemäß einer ersten Ausführungsform der Erfindung. Das Kennzeichenfolienstück 3 weist eine Innenfläche 4 und eine Außenfläche 5 auf. Die Innenfläche 4 des Kunststofffolienstücks 3 trägt ein Kennzeichenmittel 6, das in dieser ersten Ausführungsform der Erfindung aus mehreren unterschiedlichen Aufdrucken zusammengesetzt ist. Die Bezeichnung Innenfläche 4 bedeutet lediglich, dass das Kunststofffolienstück 3 mit dieser Innenfläche 4 auf dem zu kennzeichnenden hier nicht gezeigten Kunststoffgegenstand schmelztechnisch aufgebracht ist.

Dazu wird die klebstofffreie Innenfläche 4 adhäsiv von der Klebstoffbeschichtung einer Trägerfolie oder eines Trägerfolienstreifens gehalten. Das Material des Kunststofffolienstücks 3 ist in dieser Ausführungsform ein thermoplastischer Kunststoff wie ein HDPE (High Density Polyethylen) oder ein PP (Polypropylen) oder einen PET (Polyester) Kunststoff, der transparent und durchsichtig ist. Aufgrund der Transparenz kann die Schmelzverbindungskennzeichnung, wenn sie auf einem Gegenstand angeordnet ist, auch von der Außenfläche 5 aus betrachtet werden und auf die aufgedruckten Daten zugegriffen werden.

In dieser ersten Ausführungsform eines Kunststofffolienstücks 3 besteht das Kennzeichenmittel 6 aus mehreren Komponenten, einem Barcode 8, der mithilfe eines Barcodelesers ausgelesen werden kann, einem alphanumerischen Aufdruck 26, der, da hier die Innenfläche 4 beschichtet ist, in Spiegelschrift aufgebracht ist, und zusätzlich weist dieses Kennzeichenmittel 6 des Kunststofffolienstücks 3 fälschungssichere Merkmale in Form eines Guillochemusters 27 und eines Kippfarbenmusters 28 auf. Dabei richtet sich die Breite b des Kunststofffolienstücks im Wesentlichen nach der Breite des Barcodes 8 und die Länge l des Kunststofffolienstücks 3 richtet sich danach wie viele zusätzliche Kennzeichenmittel 6 auf die Innenfläche des Kunststofffolienstücks 3 aufzudrucken sind. Die Folienstärke d liegt vorzugsweise zwischen 5 µm ≤ d ≤ 500 µm.

Figur 2 zeigt eine schematische perspektivische Ansicht eines einschmelzbaren Kunststofffolienstücks 3 mit aufgebrachtem Kennzeichenmittel 6' einer Schmelzverbindungskennzeichnung 1 gemäß einer zweiten Ausführungsform der Erfindung. Auch in dieser zweiten Ausführungsform ist die Innenfläche 4 des Kunststofffolienstücks 3' mit einem Kennzeichenmittel 6' bedruckt, das einerseits einen alphanumerischen Aufdruck 26 aufweist, der wiederum in Spiegelschrift anzuordnen sind, da die Auswertung des alphanumerischen Aufdrucks 26 von der Außenfläche 5 aus erfolgt, während der Aufdruck auf der Innenfläche 4 des Kunststofffolienstücks 3' angeordnet ist. Einen großen Flächenbereich der Innenfläche 4 ist bei dieser zweiten Ausführungsform der Erfindung von einem Datamatrixcodeaufdruck 9 belegt, der 22 x 22 = 464 Bit-Plätze aufweist, so dass Informationen von mehr als 90 MBit durch diesen Aufdruck gespeichert und optisch abgerufen werden können. Die Folienstärke d entspricht der Folienstärke des Kunststofffolienstücks in Figur 1 und die Länge und Breite richten sich im Wesentlichen nach den Abmessungen des Datamatrixcodeausdrucks 9.

Figur 3 zeigt eine schematische perspektivische Ansicht eines ein- oder aufschmelzbaren Kunststofffolienstücks 3" mit aufgebrachtem Kennzeichenmittel 6" einer Schmelzverbindungskennzeichnung 1 gemäß einer dritten Ausführungsform der Erfindung. Das Kennzeichenmittel 6" dieser dritten Ausführungsform der Erfindung ist ein Funkchip 10, dessen gespeicherte Daten über einen funktechnischen Zugriff abrufbar sind. An dem Kunststofffolienstück, das aus einem transparenten Kunststofffolienmaterial besteht, kann zusätzlich ein erläuternder alphanumerischer Aufdruck 26 angeordnet sein, der spiegelbildlich auf die Innenfläche 4 aufgebracht ist und somit von der Außenfläche 5 aus lesbar ist. Jedoch ist es auch möglich, auf einen derartigen alphanumerischen Aufdruck 26 zu verzichten. In diesem Fall kann ein nicht-transparenter, thermoplastischer Kunststoff für das Kunststofffolienstück 3 eingesetzt werden.

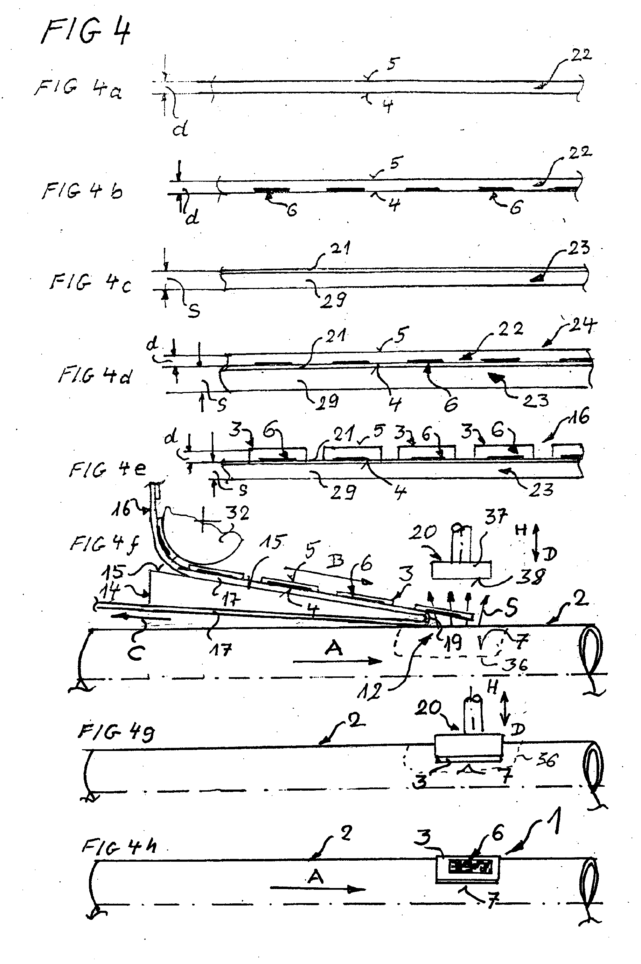

Figur 4 zeigt mit den Figuren 4a bis 4h schematische Querschnitte von Komponenten einer Schmelzverbindungskennzeichnung 1 im Rahmen eines Verfahrens zur Schmelzverbindungskennzeichnung eines Gegenstands 2.

Figur 4a zeigt den Querschnitt durch eine Kunststofffolie 22 mit beliebiger Breite und beliebiger Länge, die eine Innenfläche 4 und eine Außenfläche 5 aufweist. In dieser Darstellung der Figur 4a ist die Innenfläche 4 unten angeordnet und die Außenfläche 5 oben angeordnet. Die Innenfläche 4 der Kunststofffolie 22 ist letztendlich die Fläche, die mit einem Oberflächenbereich des zu kennzeichnenden Gegenstands eine Schmelzverbindung eingeht, um die erfindungsgemäße Schmelzverbindungskennzeichnung zu realisieren.

Das Material dieser Kunststofffolie 22 ist ein Thermoplast, dessen Transparenz von der Art des Kennzeichenmittels 6, wie es in den Figuren 1 bis 3 dargestellt wird, abhängt. Wenn beispielsweise das Kennzeichenmittel ein Funkchip ist, kann der thermoplastische Kunststoff vollständig intransparent sein. Besteht jedoch das Kennzeichenmittel beispielsweise aus alphanumerischen Zeichen oder einem Barcode oder einem Datamatrixcode, wie in den Figuren 1 und 2 gezeigt, so muss die Transparenz der Kunststofffolie 22 gewährleistet sein, wenn das Kennzeichenmittel wie in der nachfolgenden Figur 4b auf die Innenfläche 4 der Kunststofffolie 22 angebracht wird. Die Dicke d der Kunststofffolie 22 entspricht der Stärke des Kunststofffolienstücks, wie es in den Figuren 1 bis 3 gezeigt und erörtert wird.

In Figur 4b werden auf die Innenfläche 4, die in dieser Darstellung die Unterseite bildet, in vorgegebenen Abständen vorzugsweise in Zeilen und Spalten Kennzeichenmittel 6 auf- oder eingebracht, die zu der Kennzeichnung des Gegenstands erforderlich sind. Durch das Aufbringen der Kennzeichenmittel 6 in Figur 4b auf die Innenfläche der Kunststofffolie 22 entsteht praktisch eine Kennzeichenfolie mit einer Vielzahl in Zeilen und Spalten angeordneten Kennzeichen 6. Gleichzeitig wird durch das Aufbringen der Kennzeichenmittel 6 in Figur 4b auf die Innenfläche 4 der Kunststofffolie 22 ein größtmöglicher Schutz der Schmelzverbindungskennzeichnung insbesondere des Kennzeichenmittels 6 erreicht.

Figur 4c zeigt eine Trägerfolie 23, die aus einem folienförmigen Trägermaterial 29 und einer Klebstoffbeschichtung 21 besteht. Die Trägerfolie 23 weist in dieser Ausführungsform der Erfindung ein Folienmaterial 29 auf Zellulosebasis wie einer reißfesten Papierfolie auf. Die Stärke s, die das Material der Trägerfolie 23 aufweist, ist derart vorgesehen, dass die Trägerfolie 23 über eine Trennkante in einem spitzen Winkel abgebogen und von der Kunststofffolie mit den vorzugsweise innenseitig angeordneten Kennzeichenmitteln abgezogen werden kann. Außerdem soll das Folienmaterial 29 temperaturfest sein, so dass ein Abziehen der Trägerfolie 23 stabil und für das Abkanten an der Trennkante biegsam bleibt, zumal die Trennkante der Wärmerückstrahlung eines vorgeheizten Außenflächenbereichs des zu kennzeichnenden Gegenstands in einer Kennzeichnungsposition einer Kennzeichnungsvorrichtung ausgesetzt ist.

Auf die Klebstoffbeschichtung 21 kann, wie Figur 4d zeigt, die Kunststofffolie 22 mit denen in Spalten und Zeilen angeordneten Kennzeichenmitteln 6 aufgebracht werden. Damit entsteht eine Etikettierfolie 24, wobei die Kennzeichenmittel 6 in dieser Ausführungsform der Erfindung auf der klebstofffreien Innenfläche 4 der Kunststofffolie 22 angeordnet sind.

Figur 4e zeigt schließlich einen Etikettierstreifen 16, der sich von der in Figur 4d gezeigten Etikettierfolie 24 dadurch unterscheidet, dass nun die Trägerfolie 23 zu Trägerfolienstreifen 17 aufgetrennt ist, so dass jetzt auf dem Trägerfolienstreifen 17 eine Zeile von separierten Kunststofffolienstücken angeordnet ist. Das Auftrennen der in Figur 4d gezeigten Etikettierfolie 24 in Etikettierstreifen 16 mit separierten Kunststofffolienstücken 3 kann in einem einzigen Schritt mittels einer Schneidwalze erfolgen. Dazu ragen aus der Schneidwalze Schneidkanten heraus, welche die Trägerfolienstreifen bilden und weitere Schneidkanten, welche das Separieren der Kunststofffolienstücke mit angeordneten Kennzeichenmitteln ermöglichen. Für das separieren ragen die Schneidkanten der Schneidwalze lediglich entsprechend der Dicke d der Kunststofffolie 22 aus der Schneidwalze heraus, während die Schneidkanten für das Auftrennen zu Trägerfolienstreifen in der Größenordnung der Stärke s der Trägerfolie 23 plus der Dicke d der Kunststofffolie 22 mit dem Kennzeichenmitteln aus der Schneidwalze herausragen. Die in den Darstellungen der Figur 4 gezeigten Dicken d und Stärken s sind nicht maßstabsgerecht, sondern sollen lediglich den Aufbau und die Struktur einer Schmelzverbindungskennzeichnung verdeutlichen.

Figur 4f zeigt nun das Applizieren der Kunststofffolienstücke 3 mit aufgebrachten Kennzeichenmitteln 6 auf den Kunststoffgegenstand 2, der in Pfeilrichtung A einer Kennzeichenposition 12 zugeführt wird. Der Kunststoffgegenstand 2 ist in einem Außenflächenbereich 7, der mit einer gestrichelten Linie 36 gekennzeichnet ist, auf einer Einschmelztemperatur für die Kunststofffolienstücke 3 vorgeheizt. Dieses soll durch die Pfeilrichtung S einer Wärmerückstrahlung verdeutlicht werden, da dieser aufgeheizte Außenflächenbereich des Gegenstands 2 Strahlungswärme abgibt. Figur 4f zeigt außerdem im Querschnitt einen Applikator 14, mit dem eine Verspendung der Kunststofffolienstücke 3 mit aufgebrachtem Kennzeichenmitteln 6 erfolgen kann.

Dazu weist der Applikator 14 eine Zufuhrfläche 15 auf, auf der die Kunststofffolienstücke 3 mit dem Kennzeichenmittel 6 dem aufgeheizten Außenflächenbereich 7 des Gegenstands 2 mithilfe des Trägerfolienstreifens 17 in Pfeilrichtung B zugeführt werden. An einer Trennkante 19 des Applikators 14 werden die Kunststofffolienstücke 3 mit auf der Innenfläche 4 angeordneten Kennzeichenmitteln 6 von dem Trägerfolienstreifen 17 getrennt und auf den vorgeheizten Außenflächenbereich 7 des Gegenstands 2 platziert. Über die Trennkante 19 wird der Trägerfolienstreifen 17 abgezogen und in Pfeilrichtung C auf einer Antriebsrolle 33 aufgewickelt.

Oberhalb des aufgeheizten Außenflächenbereichs 7 des Kunststoffgegenstandes 2 ist eine Andruckvorrichtung 20 mit einem Andruckstempel 37 angeordnet dessen Andruckfläche 38 der Außenflächenkontur des Außenflächenbereichs 7 des Kunststoffgegenstands 2 angepasst ist. Die der Andruckstempel 37 kann in Pfeilrichtung D auf das Kunststofffolienstück 3 im Bereich des vorgeheizten Außenflächenbereichs des Kunststoffgegenstands 2 abgesenkt werden, um eine Schmelzverbindung zwischen der Innenfläche 4 des Kunststofffolienstücks 3 und dem Außenflächenbereich 7 des Kunststoffgegenstands 2 zu unterstützen. Außerdem kann der Andruckstempel 37 in Pfeilrichtung H von dem Kunststofffolienstücks 3 abgehoben werden, wie es die nachfolgenden Figuren 4g und 4h zeigen.

In Figur 4g ist der Andruckstempel der Andruckvorrichtung 20 auf den Außenoberflächenbereich 7 des Kunststoffgegenstands 2 in Pfeilrichtung D abgesenkt und kann Bruchteile von Sekunden später in Pfeilrichtung H abgehoben werden, da das das Angleichen der Kontur des Kunststofffolienstücks 3 an den Außenflächenbereich 7 des Kunststoffgegenstands 2 und das Schmelzverbinden nur wenige Hundertstelsekunden erfordert. Dieser Vorgang kann auch z.B. mittels Druckluft unterstützt werden.

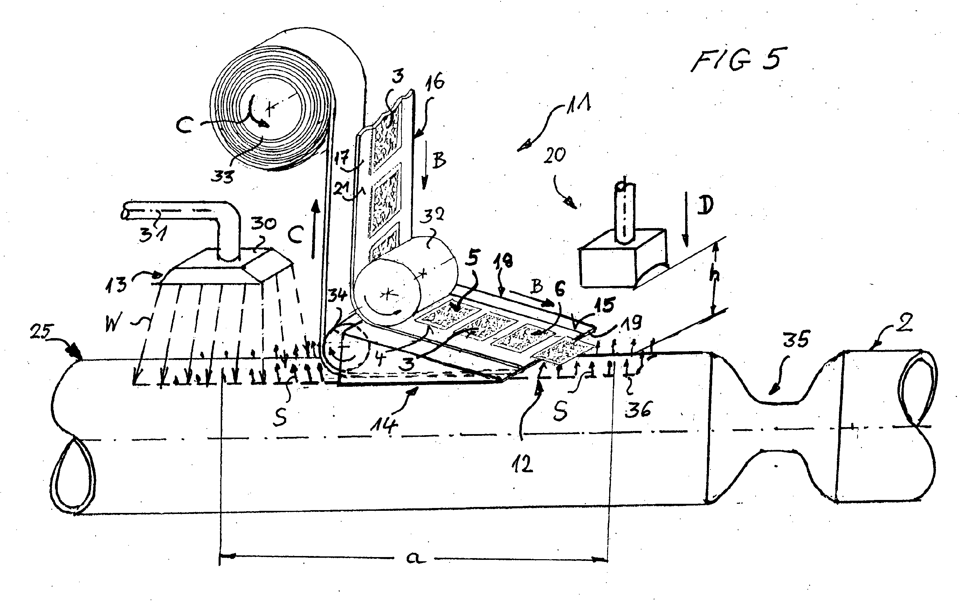

In Figur 4h wird nun die gefertigte Schmelzverbindungskennzeichnung 1 des Kunststoffgegenstands 2 in dem vorgesehenen Außenflächenbereich 7 gezeigt. Der Kunststoffgegenstand 2 kann anschließend für eine nächste Kennzeichnung in Pfeilrichtung A geführt werden, sobald der Andruckstempel begehoben ist. Figur 5 zeigt eine perspektivische Prinzipskizze einer Kennzeichnungsvorrichtung 11 für ein Kennzeichnen eines Kunststoffgegenstands 2 mit einer Schmelzverbindungskennzeichnung im Bereich einer Kennzeichnungsposition 12. Der in Figur 5 gezeigte Kunststoffgegenstand 2 ist ein Kunststoffschlauch, der bei der Kunststoffflaschenherstellung ein Zwischenprodukt darstellt und bereits an Stellen, an denen die Schraubverschlussöffnung angebracht werden soll, eine Einschnürung 35, wie es Figur 5 zeigt, aufweist. Die Schmelzverbindungskennzeichnung soll in der Kennzeichnungsposition 12 kurz vor der Einschnürung 35 auf den Kunststoffgegenstand 2 auf- oder eingeschmolzen werden.

Dazu weist die Kennzeichnungsvorrichtung 11 eine Zuführung 25 auf, über die der Kunststoffgegenstand 2 in Zuführrichtung A zu der Kennzeichnungsposition 12 der Kennzeichnungsvorrichtung 11 geführt wird. Die Zuführung 25 ist nicht im Detail dargestellt, sondern lediglich Ihre Position relativ zu der Kennzeichnungsposition 12. Weiterhin weist die Kennzeichnungsvorrichtung 11 eine Heizvorrichtung 13 auf, falls der Gegenstand, wie in Figur 5 dargestellt nicht bereits mit einer entsprechenden Einschmelztemperatur der Zuführung 25 zugeführt wird. Die Heizvorrichtung 13 ist im Bereich der Kennzeichnungsposition 12 angeordnet und weist in dieser ausführungsform einen Heizstrahler 30 auf.

Der Heizstrahler 30 ist an einer Halterung 31 fixiert, die Zuleitungen zur Versorgung von Heizstrahlerelementen mit elektrischer Energie aufweist. Die Wärmestrahlen W des Heizstrahlers 30 heizen mindestens lokal einen Außenflächenbereich 7 des Kunststoffgegenstands 2 auf. Dieser aufgeheizte Außenflächenbereich . 7 ist mit einer gestrichelten Linie 36 markiert, die einen aufgeheizten Bereich umgibt, der von dem Einwirkungsbereich der Wärmestrahlen W bis zu der Kennzeichnungsposition 12 reicht. Die Rückstrahlung des aufgeheizten Außenflächenbereichs 7 des Kunststoffgegenstands 2 ist mit dem Buchstaben W gekennzeichnet. Ein Abstand a zwischen der Heizposition und dem Heizstrahler 30 ist so gering wie möglich gehalten, um Energie zu sparen.

Zwischen dem Heizstrahler 30 und der Kennzeichnungsposition 12 ist ein Applikator 14 angeordnet. Der Applikator 14 weist eine Zufuhrfläche 15 für einen Etikettierstreifen 16 auf, der über eine erste Umlenkrolle 32 der Zufuhrfläche in Pfeilrichtung B zugeführt wird. Dieser Etikettierstreifen 16 weist einen Trägerfolienstreifen 17 und aufgeklebten klebstofffreien Kunststofffolienstücken 3 mit innenseitig angeordneten Kennzeichenmitteln 6 auf. Diese Kunststofffolienstücken 3 sind auf dem Trägerfolienstreifen 17 separiert und werden von einer Klebstoffbeschichtung des Trägerfolienstreifens 17 in Position gehalten.

Eine Trenneinrichtung 18 der Kennzeichnungsvorrichtung 11 ist im Bereich der Kennzeichnungsposition 12 angeordnet. Die Trenneinrichtung 18 weist eine Trennkante 19 auf, an der die klebstofffreien Kunststoffstücke 3 mit den angebrachten Kennzeichenmitteln 6, von dem stabilen und reißfesten Trägerfolienstreifen 17 getrennt werden. Während die klebstofffreien Kunststoffstücke 3 auf den vorgeheizten Oberflächenbereich 7 des Kunststoffgegenstands 2 entlang der Zufuhrfläche 15 geschoben werden, wird die Trägerfolie 17 mit der Klebstoffbeschichtung an der Trennkante 19 in eine entgegengesetzte Pfeilrichtung C unterhalb der Zufuhrfläche 15 über eine zweite Umlenkrolle 34 des Applikators 14 einer Antriebsrolle 33 zugeführt. Der Trägerfolienstreifen 17 wird auf der Antriebsrolle aufgewickelt und kann solange die Klebstoffbeschichtung wirksam bleibt wiederverwendet werden.

Oberhalb der Kennzeichnungsposition 12 ist in einer Abstandshöhe h eine Andruckvorrichtung 20 angeordnet, mit der in Pfeilrichtung D ein Anpresswerkzeug auf das Kunststofffolienstück 3 in Pfeilrichtung D abgesenkt werden kann, sobald dieses auf den aufgeheizten Außenflächenbereich des Gegenstands 2 aufliegt. Nach einem kurzen Einschmelzen oder Aufschmelzen der Innenfläche 4 mit aufgebrachten Kennzeichenmitteln kann die Andruckvorrichtung 20 wieder abgehoben werden.

Der Einschmelz- oder Aufschmelzvorgang und damit die Fertigstellung einer Schmelzverbindungskennzeichnung erfordert in dieser Kennzeichenvorrichtung lediglich Bruchteile von Sekunden.

### Bezugszeichenliste

- 1: Schmelzverbindungskennzeichnung
- 2: Kunststoffgegenstand
- 3, 3', 3": Kunststofffolienstück
- 4: Innenfläche
- 5: Außenfläche
- 6, 6', 6": Kennzeichenmittel
- 7: Außenflächenbereich
- 8: Barcodeaufdruck
- 9: Datamatrixcodeaufdruck
- 10: Funkchip
- 11: Schmelzverbindungskennzeichnungsvorrichtung
- 12: Kennzeichnungsposition
- 13: Heizvorrichtung
- 14: Applikator
- 15: Zufuhrfläche
- 16: Etikettierstreifen
- 17: Trägerfolienstreifen
- 18: Trenneinrichtung
- 19: Trennkante
- 20: Andruckvorrichtung
- 21: Klebstoffbeschichtung
- 22: Kunststofffolie
- 23: Trägerfolie
- 24: Etikettierfolie
- 25: Zuführung
- 26: alphanumerischer Aufdruck
- 27: Guillochemuster
- 28: Kippfarbenmuster
- 29: Folienmaterial
- 30: Heizstrahler
- 31: Halterung mit Zuleitung
- 32: Umlenkrolle
- 33: Antriebsrolle
- 34: Umlenkrolle
- 35: Einschnürung
- 36: gestrichelte Linie
- 37: Andruckstempel
- 38: Andruckfläche

- A: Pfeilrichtung
- B: Pfeilrichtung
- C: Pfeilrichtung
- D: Pfeilrichtung
- S: Pfeilrichtung
- W: Wärmestrahlung

## Patentansprüche

1. Kunststoffgegenstand (2) mit einem Schmelzverbindungskennzeichnungssystem, wobei eine Schmelzverbindungskennzeichnung (1) ein transparentes Kunststofffolienstück (3) mit einer Innenfläche (4) und einer Außenfläche (5) aufweist, wobei die Innenfläche (4) und die Außenfläche (5) des Kunststofffolienstücks (3) klebstofffrei sind, wobei die Innenfläche (4) ein Kennzeichenmittel (6) aufweist, und wobei die Innenfläche (4) des Kunststofffolienstücks (3) mit dem Kunststoffgegenstand (2) eine Schmelzverbindung aufweist
**dadurch gekennzeichnet, dass**
das Kennzeichenmittel (6) einen Aufdruck aufweist, der spiegelbildlich auf der Innenfläche (4) des Kunststofffolienstücks (3) angeordnet ist und mit einem Außenflächenbereich des Kunststoffgegenstands (2) eine Schmelzverbindung aufweist, so dass der Aufdruck auf der Außenfläche (5) des transparenten Kunststoffolienstücks (3) sichtbar und lesbar erscheint.

2. Kunststoffgegenstand (2) mit einem Schmelzverbindungskennzeichnungssystem nach Anspruch 1,
**dadurch gekennzeichnet, dass** das Kennzeichenmittel (6) einen Aufdruck, vorzugsweise einen Barcodeaufdruck (8) oder einen Datamatrixcodeaufdruck (9) aufweist.

3. Kunststoffgegenstand (2) mit einem Schmelzverbindungskennzeichnungssystem nach Anspruch 1,
**dadurch gekennzeichnet, dass** das Kennzeichenmittel (6) einen Funkchip (10) oder ein RFID-Inlay (Radio Frequency Identification Inlay) aufweist.

4. Kunststoffgegenstand (2) mit einem Schmelzverbindungskennzeichnungssystem nach einem der vorhergehenden Ansprüche,
**dadurch gekennzeichnet, dass** das Kennzeichenmittel (6) oder das Kunststofffolienstück (3) ein fälschungssicheres Merkmal, nämlich ein Kippfarbenmuster, ein Guillochemuster oder ein Hologramm aufweist.

5. Kunststoffgegenstand (2) mit einem Schmelzverbindungskennzeichnungssystem nach einem der vorhergehenden Ansprüche,
**dadurch gekennzeichnet, dass** das klebstofffreie Kunststofffolienstück (3) einen HDPE (High Density Polyethylen) oder einen PP (Polypropylen) Kunststoff oder einen PET (Polyester) Kunststoff aufweist.

6. Kennzeichnungsvorrichtung für ein Kennzeichnen eines Kunststoffgegenstands (2) mit einer Schmelzverbindungskennzeichnung mit den Merkmalen gemäß zumindest eines der Ansprüche 1 bis 7, aufweisend:
- eine Zuführung für einen Kunststoffgegenstand (2) zu einer Kennzeichnungsposition (12) der Kennzeichnungsvorrichtung (11);
- eine Heizvorrichtung (13), die im Bereich der Kenneichnungsposition (12) angeordnet ist, und die mindestens lokal einen Außenflächenbereich (7) des Kunststoffgegenstands (2) aufheizt;
- einen Applikator (14), der eine Zufuhrfläche (15) für einen Etikettierstreifen (16) aus einem Trägerfolienstreifen (17) und aufgeklebten klebstofffreien Kunststofffolienstücken (3) mit innenseitig angeordneten Kennzeichenmitteln (6) aufweist;
- eine Trenneinrichtung (18), die im Bereich der Kennzeichnungsposition (12) angeordnet ist, und eine Trennkante (19) aufweist, um die Kunststofffolienstücke (3) von dem Trägerfolienstreifen (17) zu trennen, bevor ein Ein- oder Aufschmelzen der Kunststofffolienstücke (3) mit innen-und/oder außenseitig angeordneten Kennzeichenmitteln (6) auf einen vorgeheizten Außenflächenbereich (7) des Kunststoffgegenstands (2) erfolgt;
- eine Andruckvorrichtung (20), die im Bereich der Kennzeichnungsposition (12) angeordnet ist, und auf die Außenfläche (5) des Kunststofffolienstücks (3) beim Ein- oder Aufschmelzen desselben in oder auf einen vorgeheizten Außenflächenbereich (7) des Kunststoffgegenstands (2) einwirkt.

7. Etikettierstreifen, der einen Trägerfolienstreifen (17) mit einseitiger Klebstoffbeschichtung (21) aufweist, wobei auf der Klebstoffbeschichtung (21) klebstofffreie Kunststofffolienstücke (3) angeordnet sind, die eine Innenfläche (4) und eine Außenfläche (5) aufweisen, wobei die Innenfläche (4) der Kunststofffolienstücke (3) über die Klebstoffbeschichtung (21) mit dem Trägerfolienstreifen (17) verbunden ist und jeweils ein Kennzeichenmittel (6) eines zu kennzeichnenden Kunststoffgegenstands (2) auf der Innenfläche (4) des Kunststofffolienstücks (3) angeordnet ist,
**dadurch gekennzeichnet, dass**
das Kennzeichenmittel (6) einen Aufdruck aufweist, der spiegelbildlich auf der Innenfläche (4) des Kunststofffolienstücks (3) angeordnet ist, so dass der Aufdruck auf der Außenfläche (5) der transparenten Kunststoffolienstücke (3) sichtbar und lesbar erscheint.

8. Etikettierstreifen nach Anspruch 7,
**dadurch gekennzeichnet, dass** das Kennzeichenmittel (6) einen Barcodeaufdruck (8) oder einen Datenmatrixcodeaufdruck (9) aufweist.

9. Etikettierstreifen nach Anspruch 7,
**dadurch gekennzeichnet, dass** das Kennzeichenmittel (6) einen Funkchip (10) oder ein RFID-Inlay (Radio Frequency Identification Inlay) aufweist.

10. Verfahren zur Schmelzverbindungskennzeichnung (1) eines Kunststoffgegenstands (2), das nachfolgende Verfahrensschritte aufweist:
- Anordnen von Kennzeichenmitteln (6) auf einer Innenfläche (4) einer klebstofffreien Kunststofffolie (22);
- Aufkleben der Innenfläche (4) auf eine Klebstoffbeschichtung (21) einer Trägerfolie (23) zu einer Etikettierfolie (24);
- Strukturieren der Etikettierfolie (24) zu Etikettierstreifen (16) mit Trägerfolienstreifen (17), die separierte anhaftende Kunststofffolienstücke (3) aufweisen, die jeweils einzelne Kennzeichenmittel (6) auf ihren Innen-und/oder Außenflächen (4) aufweisen;
- Zuführen der Etikettierstreifen (16) zu einer Kennzeichnungsvorrichtung (11);
- Trennen der Kunststofffolienstücke (3) mit angeordneten Kennzeichenmitteln (6) von dem Trägerfolienstreifen (17);
- Ein- oder Aufschmelzen der Innenfläche (4) der Kunststofffolienstücke (3) in oder auf einem vorgeheizten Außenflächenbereich (7) des Kunststoffgegenstands (2) bei vorgegebener Ein- oder Aufschmelztemperatur.

11. Verfahren nach Anspruch 10,
**dadurch gekennzeichnet, dass** das Anordnen von gedruckten Kennzeichenmitteln (6) auf der Innenfläche des Kunststofffolienstücks (3) spiegelbildlich erfolgt.

12. Verfahren nach Anspruch 10 oder Anspruch 11,
**dadurch gekennzeichnet, dass** das Ein- oder Aufschmelzen der Innenfläche (4) mindestens lokal in dem Außenflächenbereich (7) des Kunststoffgegenstands (2) bei einem Erweichungstemperaturmaximum des Kunststofffolienstücks erfolgt.

## Claims

1. Plastic object (2) with a melt splice identification system, whereby a melt splice identification (1) comprises a transparent piece of plastic film (3) with an internal surface (4) and an external surface (5), whereby the internal surface (4) and the external surface (5) of the piece of plastic film (3) are adhesive-free, whereby the internal surface (4) comprises an identification means (6), and whereby the internal surface (4) of the piece of plastic film (3) comprises a melt splice to the plastic object (2),
**characterised in that**
the identification means (6) comprises an imprint that is arranged mirror-symmetrically on the internal surface (4) of the piece of plastic film (3) and comprises a melt splice to an external surface section of the plastic object (2) such that the imprint appears visibly and legibly on the external surface (5) of the transparent piece of plastic film (3).

2. Plastic object (2) with a melt splice identification system according to claim 1,
**characterised in that** the identification means (6) comprises an imprint, preferably a bar code imprint (8) or a data matrix code imprint (9).

3. Plastic object (2) with a melt splice identification system according to claim 1,
**characterised in that** the identification means (6) comprises a radio chip (10) or an RFID inlay (radio frequency labelling inlay).

4. Plastic object (2) with a melt splice identification system according to any one of the preceding claims,
**characterised in that** the identification means (6) or the piece of plastic film (3) comprises a counterfeiting-proof feature, namely a colour shifting ink pattern, a guilloche pattern or a hologram.

5. Plastic object (2) with a melt splice identification system according to any one of the preceding claims,
**characterised in that** the adhesive-free piece of plastic film (3) comprises an HDPE (high density polyethylene) or a PP (polypropylene) plastic material or a PET (polyester) plastic material.

6. Identification device for an identification of a plastic object (2) with a melt splice identification with the features according to at least one of the claims 1 to 7, comprising:
- a feed for a plastic object (2) to an identification position (12) of the identification device (11);
- a heating device (13) that is arranged in the area of the identification position (12) and heats, at least locally, an external surface section (7) of the plastic object (2);
- an applicator (14) that comprises a feed surface (15) for a label strip (16) made of a support film strip (17) and glued-on adhesive-free pieces of plastic film (3) with identification means (6) arranged on the inside thereof;
- a separating device (18) that is arranged in the area of the identification position (12) and comprises a separating edge (19) for separating the pieces of plastic film (3) from the support film strip (17) before the pieces of plastic film (3) with identification means (6) that are arranged on the inside and/or outside thereof are melted into or onto a preheated external surface section (7) of the plastic object (2);
- a contact pressure device (20) that is arranged in the area of the identification position (12) and acts on the external surface (5) of the piece of plastic film (3) when same is melted into or onto a preheated external surface region (7) of the plastic object (2).

7. Label strip that comprises a support film strip (17) with one-sided adhesive coating (21), whereby adhesive-free pieces of plastic film (3) comprising an internal surface (4) and an external surface (5) are arranged on the adhesive coating (21), whereby the internal surface (4) of the pieces of plastic film (3) is connected to the support film strip (17) by means of the adhesive coating (21), and one identification means (6) each of a plastic object (2) to be identified is arranged on the internal surface (4) of the piece of plastic film (3),
**characterised in that**
the identification means (6) comprises an imprint that is arranged mirror-symmetrically on the internal surface (4) of the piece of plastic film (3) such that the imprint appears visibly and legibly on the external surface (5) of the transparent piece of plastic film (3).

8. Label strip according to claim 7,
**characterised in that** the identification means (6) comprises a bar code imprint (8) or a data matrix code imprint (9).

9. Label strip according to claim 7,
**characterised in that** the identification means (6) comprises a radio chip (10) or an RFID inlay (radio frequency labelling inlay).

10. Method for melt splice identification (1) of a plastic object (2) comprising the following procedural steps:
- Arranging identification means (6) on an internal surface (4) of an adhesive-free plastic film (22);
- gluing the internal surface (4) to an adhesive coating (21) of a support film (23) to form a labelling film (24);
- structuring the labelling film (24) into label strips (16) with support film strips (17) that comprise separated, adhering pieces of plastic film (3), which each comprise individual identification means (6) on their internal and/or external surfaces (5);
- feeding the label strips (16) to an identification device (11);
- separating the pieces of plastic film (3) with identification means (6) arranged on them from the support film strips (17);
- melting the internal surface (4) of the pieces of plastic film (3) into or onto a preheated external surface region (7) of the plastic object (2) at predetermined melting-in or melting-on temperature.

11. Method according to claim 10,
**characterised in that** the arrangement of printed identification means (6) on the internal surface of the piece of plastic film (3) takes place in a mirror symmetrical manner.

12. Method according to claim 10 or claim 11,
**characterised in that** the internal surface (4) is being melted, at least locally, into or onto the external surface region (7) of the plastic object (2) at a softening temperature peak of the piece of plastic film.

## Revendications

1. Objet en matière plastique (2) avec un système de marquage d'assemblage par fusion, un système de marquage d'assemblage par fusion (1) présentant une pièce en film plastique (3) transparent avec une face intérieure (4) et une face extérieure (5), la face intérieure (4) et la face extérieure (5) de la pièce en film plastique (3) étant sans colle, la face intérieure (4) présentant un moyen de marquage (6) et la face intérieure (4) de la pièce en film plastique (3) présentant un assemblage par fusion avec l'objet en matière plastique (2),
**caractérisé en ce que**
le moyen de marquage (6) présente une impression qui est disposée en miroir sur la face intérieure (4) de la pièce en film plastique (3) et présente, avec une zone de la face extérieure de l'objet en matière plastique (2), un assemblage par fusion de façon à ce que l'impression apparaisse de manière visible et lisible sur la face extérieure (5) de la pièce en film plastique (3) transparent.

2. Objet en matière plastique (2) avec un système de marquage d'assemblage par fusion conformément à la revendication n°1,
**caractérisé en ce que** le moyen de marquage (6) présente une impression, de préférence une impression de code barres (8) ou une impression de code matriciel (9).

3. Objet en matière plastique (2) avec un système de marquage d'assemblage par fusion conformément à la revendication n°1,
**caractérisé en ce que** le moyen de marquage (6) présente une puce radio (10) ou un inlay RFID (Radio Frequency Identification Inlay).

4. Objet en matière plastique (2) avec un système de marquage d'assemblage par fusion conformément à l'une des revendications précédentes,
**caractérisé en ce que** le moyen de marquage (6) ou la pièce en film plastique (3) présente une caractéristique infalsifiable, notamment un motif de couleur inclinable, un motif de guillochage ou un hologramme.

5. Objet en matière plastique (2) avec un système de marquage d'assemblage par fusion conformément à l'une des revendications précédentes,
**caractérisé en ce que** la pièce en film plastique (3) sans colle présente une matière plastique HDPE (High Density Polyethylen) ou une matière plastique PP (polypropylène) ou une matière plastique PET (polyester).

6. Dispositif de marquage pour le marquage d'un objet en matière plastique (2) avec un marquage d'assemblage par fusion ayant les caractéristiques conformément au moins à l'une des revendications n°1 à n°7, présentant :
- une alimentation pour un objet en matière plastique (2) vers une position de marquage (12) du dispositif de marquage (11) ;
- un dispositif de chauffage (13) qui est disposé dans la zone de la position de marquage (12) et chauffant au moins localement une zone de la face extérieure (7) de l'objet en matière plastique (2) ;
- un applicateur (14) qui présente une face d'alimentation (15) pour une bande d'étiquetage (16) composée d'une bande en film support (17) et de pièces en film plastique (3) collées sans colle, avec des moyens de marquage (6) disposés sur la face intérieure ;
- un dispositif de séparation (18) qui est disposé dans la zone de la position de marquage (12) et qui présente un bord de séparation (19) permettant la séparation des pièces en film plastique (3) de la bande en film support (17) avant qu'une fonte ou fusion des pièces en film plastique (3) avec des moyens de marquage (6) sur la face intérieure et/ou extérieure ne soit effectuée sur une zone de la face extérieure (7) préchauffée de l'objet en matière plastique (2) ;
- un dispositif presseur (20) qui est disposé dans la zone de la position de marquage (12) et qui agit sur la face extérieure (5) de la pièce en film plastique (3) lors de la fonte ou fusion de celle-ci dans ou sur une zone de la face extérieure (7) préchauffée de l'objet en matière plastique (2).

7. Bande d'étiquetage qui présente une bande en film support (17) avec revêtement adhésif (21) sur une face, des pièces en film plastique (3) sans colle étant disposées sur le revêtement adhésif (21) et présentant une face intérieure (4) et une face extérieure (5), la face intérieure (4) des pièces en film plastique (3) étant reliée à la bande en film support (17) par le revêtement adhésif (21) et un moyen de marquage (6) d'un objet en matière plastique (2) à marquer étant disposé sur la face intérieure (4) de la pièce en film plastique (3),
**caractérisée en ce que**
le moyen de marquage (6) présente une impression qui est disposée en miroir sur la face intérieure-(4) de la pièce en film plastique (3) de façon à ce que l'impression apparaisse de manière visible et lisible sur la face extérieure (5) des pièces en film plastique (3) transparent.

8. Bande d'étiquetage conformément à la revendication n°7,
**caractérisée en ce que** le moyen de marquage (6) présente une impression de code barres (8) ou une impression de code matriciel (9).

9. Bande d'étiquetage conformément à la revendication n°7,
**caractérisée en ce que** le moyen de marquage (6) présente une puce radio (10) ou un inlay RFID (Radio Frequency Identification Inlay).

10. Procédé pour le marquage d'assemblage par fusion (1) d'un objet en matière plastique (2), présentant les étapes de procédé suivantes :
- Disposition de moyens de marquage (6) sur une face intérieure (4) d'un film plastique (22) sans colle ;
- Collage de la face intérieure (4) sur un revêtement adhésif (21) d'un film support (23) en un film d'étiquetage (24) ;
- Structuration du film d'étiquetage (24) en bandes d'étiquetage (16) avec bande en film support (17), présentant des pièces en film plastique (3) adhérentes, séparées, qui présentent respectivement des moyens de marquage (6) sur leurs faces intérieures et/ou extérieures (4) ;
- Alimentation des bandes d'étiquetage (16) vers un dispositif de marquage (11) ;
- Séparation des pièces en film plastique (3) avec moyens de marquage (6) disposés de la bande en film support (17) ;
- Fonte ou fusion de la face intérieure (4) des pièces en film plastique (3) dans ou sur une zone de la face extérieure (7) préchauffée de l'objet en matière plastique (2) à la température de fonte ou de fusion prescrite.

11. Procédé conformément à la revendication n°10,
**caractérisé en ce que** la disposition de moyens de marquage (6) imprimés est effectuée en miroir sur la face intérieure de la pièce en film plastique (3).

12. Procédé conformément à la revendication n°10 ou à la revendication n°11,
**caractérisé en ce que** la fonte ou la fusion de la face intérieure (4) est effectuée au moins localement dans la zone de la face extérieure (7) de l'objet en matière plastique (2) à une température de ramollissement maximale de la pièce en film plastique.
